# EUROPEAN PATENT APPLICATION

(11) **EP 4 814 690 A1**
(43) Date of publication of application: **30.09.2026**
(21) Application number: 26159467.5
(22) Date of filing: 19.02.2026
(51) Int. Cl.: G06F 3/12, G06F 1/3234, H04N 1/00, G06F 11/30

(54) **INFORMATION GENERATION APPARATUS, INFORMATION GENERATION METHOD, AND CARRIER MEDIUM**

(30) Priority: 26.03.2025 JP 2025052075
(71) Applicant: Ricoh Company, Ltd., Tokyo 143-8555 (JP)
(72) Inventor: TAMURA, Daigo, Tokyo, 143-8555 (JP)
(74) Representative: SSM Sandmair

(57) **Abstract**

An information generation apparatus (10) includes a calculation unit (11) to calculate, for each of a plurality of power consumption modes of an electronic apparatus (20), an actual value of power consumption of the electronic apparatus (20), and a generation unit (12) to generate a display image, the display image including visualization information and an operation component for selecting a setting item relating to the power consumption mode, the visualization information associating the actual value of the power consumption and the power consumption mode with each other.

## Description

### BACKGROUND

### Technical Field

The present disclosure relates to an information generation apparatus, an information generation method, and a carrier medium.

### Related Art

A technique has been proposed that records an actual value of power consumption in each of multiple power consumption modes of an electronic apparatus. Japanese Unexamined Patent Application Publication No. 2007-295433 discloses a technique relating to an apparatus that stores, for each operation mode during execution, a switching time at which the apparatus enters the operation mode, and samples and records measured values of power consumption at a predetermined interval.

According to the technique described in Japanese Unexamined Patent Application Publication No. 2007-295433, the power consumption in each power consumption mode is measured and recorded, but the measurement results are not visualized. This is an issue that it takes time and effort to make a decision and perform an operation when changing the power consumption mode.

### SUMMARY

The present disclosure described herein provides an information generation apparatus including a calculation unit to calculate, for each of a plurality of power consumption modes of an electronic apparatus, an actual value of power consumption of the electronic apparatus, and a generation unit to generate a display image, the display image including visualization information and an operation component for selecting a setting item relating to the power consumption mode, the visualization information associating the actual value of the power consumption and the power consumption mode with each other.

The present disclosure described herein further provides an information generation method performed by an information generation apparatus, including calculating, for each of a plurality of power consumption modes of an electronic apparatus, an actual value of power consumption of the electronic apparatus, and generating a display image, the display image including visualization information and an operation component for selecting a setting item relating to the power consumption mode, the visualization information associating the actual value of the power consumption and the power consumption mode with each other.

The present disclosure described herein further provides a carrier medium carries computer readable code for controlling a computer system of an information generation apparatus to carry out a method, including calculating, for each of a plurality of power consumption modes of an electronic apparatus, an actual value of power consumption of the electronic apparatus, and generating a display image, the display image including visualization information and an operation component for selecting a setting item relating to the power consumption mode, the visualization information associating the actual value of the power consumption and the power consumption mode with each other.

According to one aspect of the present disclosure, when performing an operation to change the power consumption mode of the electronic apparatus, the information generation apparatus displays visualization information to a user such that a decision is made and the operation is performed in a short time.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overall configuration of an information generation system according to a first embodiment;
FIG. 2 is a diagram illustrating a hardware configuration of an electronic apparatus and an information generation apparatus according to the first embodiment;
FIG. 3 is a block diagram illustrating a functional configuration of an information generation apparatus according to the first embodiment;
FIG. 4 is a diagram illustrating an example of transition of power consumption modes of an electronic apparatus according to the first embodiment;
FIG. 5 is a diagram illustrating an example of a display image according to the first embodiment;
FIG. 6 is a diagram illustrating an example of a setting image according to the first embodiment;
FIG. 7 is a flowchart of an information generation method performed by an information generation apparatus according to the first embodiment;
FIG. 8 is a diagram illustrating an example of a display image according to a modification of the first embodiment;
FIG. 9 is a diagram illustrating a region indicating a power consumption mode included in visualization information according to a second embodiment; and
FIG. 10 is a flowchart of an information generation method performed by an information generation apparatus according to the second embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Referring now to the drawings, embodiments of the present disclosure are described below. For the sake of simplicity, identical or similar reference numerals denote identical or similar elements such as parts and materials having the same functions, and redundant descriptions thereof are omitted unless otherwise required.

### First Embodiment

### Configuration of Information Generation System

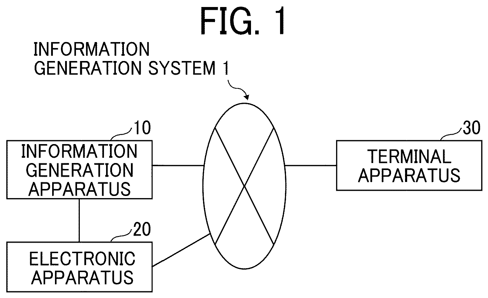

FIG. 1 is a diagram illustrating an overall configuration of an information generation system 1 according to a first embodiment. In the information generation system 1, an information generation apparatus 10, an electronic apparatus 20, and a terminal apparatus 30 are communicably connected. The information generation system 1 includes one each of the information generation apparatus 10, the electronic apparatus 20, and the terminal apparatus 30, but may include a plurality of each.

The information generation apparatus 10 and the terminal apparatus 30 perform communication via a wired communication network such as the Internet, a wired local area network (LAN), or a wide area network (WAN). Alternatively, the information generation apparatus 10 and the terminal apparatus 30 may perform communication via a wireless communication network using, for example, a wireless LAN access point, short-range wireless communication such as Bluetooth^{®} or the near field communication (NFC), or Wireless Fidelity (Wi-Fi^{®}).

The electronic apparatus 20 and the terminal apparatus 30 perform communication via a wired communication network such as the Internet, a wired LAN, or a WAN. Alternatively, the electronic apparatus 20 and the terminal apparatus 30 may perform communication via a wireless communication network using, for example, a wireless LAN access point, short-range wireless communication such as Bluetooth^{®} or the NFC, or Wi-Fi^{®}.

The information generation apparatus 10 may be included in the electronic apparatus 20. The electronic apparatus 20 is, for example, an image forming apparatus. The electronic apparatus 20 may alternatively be, for example, an output apparatus such as a projector or a digital signage, an industrial machine, an imaging apparatus, or an information processing apparatus. In the following description, the electronic apparatus 20 is described as an image forming apparatus.

### Hardware Configuration

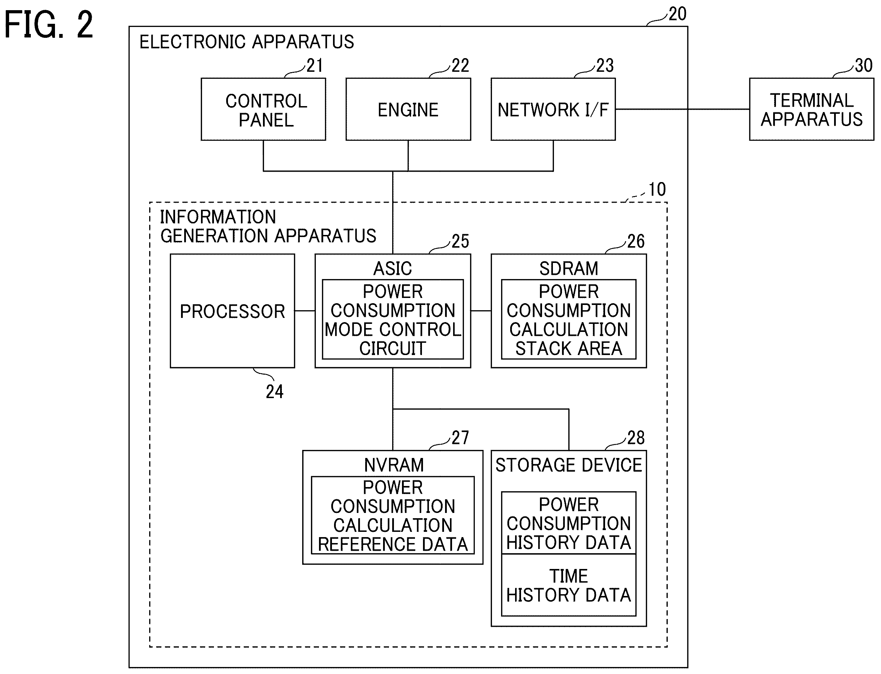

FIG. 2 is a diagram illustrating a hardware configuration of the electronic apparatus 20 and the information generation apparatus 10 according to the first embodiment. The configuration illustrated in FIG. 2 is a configuration in the case where the electronic apparatus 20 is an image forming apparatus, and the information generation apparatus 10 is included in the electronic apparatus 20. The information generation apparatus 10 may be a separate apparatus from the electronic apparatus 20. The hardware configuration of the electronic apparatus 20 is not limited to that illustrated in FIG. 2.

As illustrated in FIG. 2, the electronic apparatus 20 includes a control panel 21, an engine 22, a network interface (I/F) 23, a processor 24, an application-specific integrated circuit (ASIC) 25, a synchronous dynamic random-access memory (SDRAM) 26, a non-volatile random-access memory (NVRAM) 27, and a storage device 28. The information generation apparatus 10 is configured by components including the processor 24, the ASIC 25, the SDRAM 26, the NVRAM 27, and the storage device 28. The control panel 21, the engine 22, the network I/F 23, the processor 24, the SDRAM 26, the NVRAM 27, and the storage device 28 are connected to the ASIC 25.

The control panel 21 is, for example, a touch panel. The control panel 21 receives an input to the electronic apparatus 20 and displays, for example, the state of the electronic apparatus 20. The engine 22 is, for example, a print engine such as a plotter. The engine 22 includes, in addition to an engine portion, an image processing portion that performs processes such as error diffusion and gamma conversion.

The network I/F 23, which may be implemented by an interface circuit, is an interface for data communication through a communication network. The electronic apparatus 20 is communicably connected to the terminal apparatus 30 via the network I/F 23.

The processor 24 includes various arithmetic devices such as a central processing unit (CPU) and a graphics processing unit (GPU). The processor 24 controls the overall operation of the electronic apparatus 20. The processor 24 also controls input from the control panel 21.

The ASIC 25 is an integrated circuit dedicated to image processing and includes hardware elements for image processing. The ASIC 25 includes a power consumption mode control circuit that controls a peripheral component interconnect (PCI) target, an accelerated graphics port (AGP) master, an arbiter (ARB) as a central processor of the ASIC 25, the SDRAM 26, the NVRAM 27, and the storage device 28. The power consumption mode control circuit uses the processor 24 to control the power consumption mode of the electronic apparatus 20.

The SDRAM 26 is a high-speed volatile memory that temporarily stores image data. The SDRAM 26 is a memory in which programs and data are expanded. The SDRAM 26 is also a readable and writable memory that is used, for example, as a memory for rendering in a printer. The SDRAM 26 has a power consumption calculation stack area where each power consumption mode and the calculated power consumption are temporarily stored in association with each other.

The NVRAM 27 is a writable non-volatile storage device that stores, for example, setting information. The NVRAM 27 stores reference data for power consumption calculation for generating power consumption history data in each power consumption mode. The storage device 28 is a large-capacity storage device such as a hard disk drive (HDD) or a solid-state drive (SSD), and stores, for example, an operating system (OS), application programs, and various data. The storage device 28 stores the power consumption history data and time history data in each power consumption mode for calculating the power consumption in each power consumption mode.

The power consumption mode control circuit of the ASIC 25 measures the time spent in each power consumption mode and controls the measured result to be stored in the storage device 28 as the time history data in each power consumption mode. The power consumption mode control circuit of the ASIC 25 generates power consumption history data in each power consumption mode based on the reference data for power consumption calculation stored in the NVRAM 27 and the time history data in each power consumption mode.

The power consumption mode control circuit calculates power consumption in each power consumption mode based on the power consumption history data and the time history data in each power consumption mode stored in the storage device 28. The measured time spent in each power consumption mode and the calculated power consumption in each power consumption mode are examples of actual values relating to power consumption.

The power consumption mode control circuit controls each power consumption mode and the calculated power consumption to be temporarily stored in the power consumption calculation stack area of the SDRAM 26 in association with each other. The power consumption mode control circuit generates visualization information that associates the actual value of the power consumption of the electronic apparatus 20 and the power consumption mode, based on the data stored in the power consumption calculation stack area. The power consumption mode control circuit also generates an operation component for selecting a setting item relating to the power consumption mode. The operation component may be associated with the visualization information, or a selection image including the operation component may be generated.

The power consumption mode control circuit generates a display image including the visualization information and the operation component. The display image may include the selection image. The power consumption mode control circuit outputs the display image to the control panel 21 to be displayed. The power consumption mode control circuit may output the display image to the terminal apparatus 30 via the network I/F 23 to be displayed.

### Functional Configuration

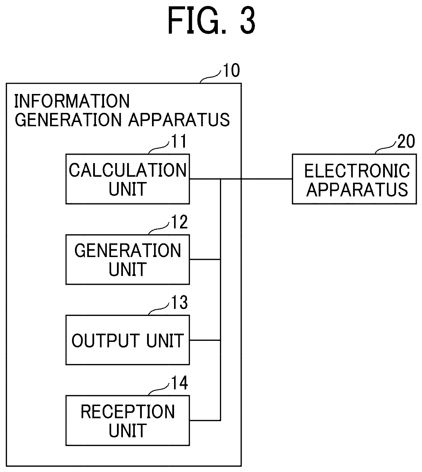

FIG. 3 is a block diagram illustrating a functional configuration of the information generation apparatus 10 according to the first embodiment. The information generation apparatus 10 is communicably connected to the electronic apparatus 20. The information generation apparatus 10 includes a calculation unit 11, a generation unit 12, an output unit 13, and a reception unit 14. These functional units of the information generation apparatus 10 are implemented by or caused to function by one or more of the hardware components illustrated in FIG. 2 operating in accordance with instructions from the processor 24 according to the control program loaded from the storage device 28 to the SDRAM 26 or the NVRAM 27.

The calculation unit 11 calculates an actual value of power consumption in each power consumption mode in the electronic apparatus 20 that has multiple power consumption modes, which are modes relating to the power consumption. The generation unit 12 generates a display image that includes visualization information associating the actual value of the power consumption of the electronic apparatus 20 and the power consumption mode, and an operation component for selecting a setting item relating to the power consumption mode.

The power consumption of the electronic apparatus 20 is measured as follows. The voltage applied to a voltage measurement target circuit included in the electronic apparatus 20 is measured, and then the power consumption of the electronic apparatus 20 during the execution time of each power consumption mode is measured. The time is measured by using, for example, a clock function such as a timer, a function of acquiring a start time and an end time of each power consumption mode, and a function of calculating an execution time of each power consumption mode based on the acquired start and end times.

The output unit 13 outputs the display image to the control panel 21 of the electronic apparatus 20. Alternatively, the output unit 13 may output the display image to the terminal apparatus 30. The display image is displayed on the control panel 21, or may alternatively be displayed on, for example, the display of the terminal apparatus 30.

The power consumption modes of the electronic apparatus 20 include various modes such as a job executing state which is a normal operation mode, a standby state in which the power consumption of the electronic apparatus 20 is reduced, and an energy saving state. In the following description, a mode may be referred to as a state. The power consumption differs among the multiple power consumption modes. The job executing state is a state in which the functions of the electronic apparatus 20 are executable or are being executed for a job, and may be referred to as a first state. The standby state is a state in which the power consumption is smaller than that of the job executing state, and may be referred to as a second state. The energy saving state is a state in which the power consumption is smaller than those of the job executing state and the standby state, and may be referred to as a third state. The job executing state, the standby state, and the energy saving state may each be further classified into more detailed power consumption modes.

The actual values relating to the power consumption include various actual values such as the time spent in each power consumption mode measured in the electronic apparatus 20 and the calculated power consumption in each power consumption mode. The visualization information is, for example, a bar graph. Alternatively, the visualization information may be any one of various other graphs such as a pie chart or various visualized information such as a table or a three-dimensional graph.

The selection image is an image presenting a setting image for performing a setting corresponding to a setting item relating to the power consumption mode by operating a setting item button, which is an example of the operation component, displayed on the setting image.

In the information generation apparatus 10 according to the present embodiment, the calculation unit 11 calculates the actual value of the power consumption of the electronic apparatus 20 per unit time in each power consumption mode. The generation unit 12 generates visualization information indicating the result calculated by the calculation unit 11.

The reception unit 14 receives a setting relating to the power consumption mode based on an operation performed on the display image. When an operation is performed on the display image, the output unit 13 outputs a setting image corresponding to the setting item relating to the power consumption mode. The operation to the display image is an operation to a setting item button included in the selection image on the display image. The output unit 13 outputs a setting image corresponding to the operated setting item button. The reception unit 14 receives the operation to the setting image.

### Example of Transition of Power Consumption Modes

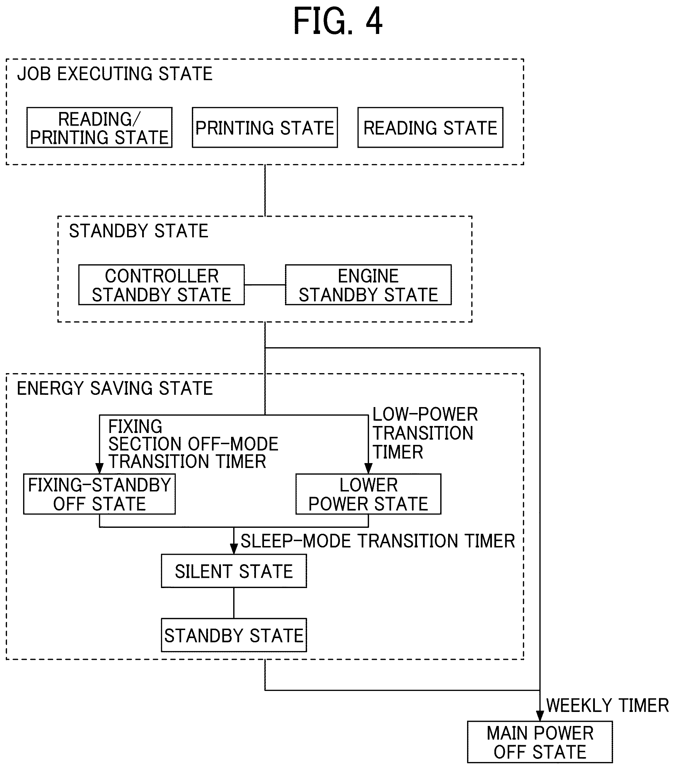

FIG. 4 is a diagram illustrating an example of transition of the power consumption modes of the electronic apparatus 20 according to the first embodiment. The electronic apparatus 20 is described as an image forming apparatus. The power consumption modes of the electronic apparatus 20 are roughly classified into the job executing state, the standby state, and the energy saving state. In addition, the power consumption modes of the electronic apparatus 20 includes a main power off state in which the main power of the electronic apparatus 20 is not turned on.

The job executing state includes a reading/printing state, a printing state, and a reading state. The reading/printing state indicates a state in which the electronic apparatus 20 is simultaneously executing a document reading job and a printing job. The printing state indicates a state in which the electronic apparatus 20 is executing a printing job. The reading state indicates a state in which the electronic apparatus 20 is executing a document reading job.

The standby state includes a controller standby state and an engine standby state. The controller standby state is, for example, a state in which the components that control the operation of the electronic apparatus 20 are stopped. The engine standby state is, for example, a state in which the engine 22 of the electronic apparatus 20 is stopped.

The energy saving state includes a fixing-standby off state, a low power state, a silent state, and a standby state. The fixing-standby off state is a state in which the fixing section for fixing a toner image carried onto a sheet such as paper on which an image is to be formed is stopped. The low power state is a state in which the control panel 21 of the electronic apparatus 20 is put to sleep. The silent state is a state in which, for example, the operation of the fan included in the electronic apparatus 20 is minimized. The silent state is also referred to as a sleep mode. The standby state is a state in which each component of the electronic apparatus 20 is on standby so as to transition to an activated state immediately in response to an operation instruction.

The setting items relating to the power consumption modes include setting items relating to the mode transitions such as a fixing section off-mode transition timer, a low-power transition timer, a sleep-mode transition timer, and a weekly timer.

The fixing section off-mode transition timer is a timer for setting a period of time to transition from the controller standby state or the engine standby state to the fixing-standby off state. The low-power transition timer is a timer for setting a period of time to transition from the controller standby state or the engine standby state to the low power state. The sleep-mode transition timer is a timer for setting a period of time to transition from the fixing-standby off state or the low power state to the silent state. The weekly timer is a timer for setting a period of time to transition from the standby state or the energy saving state to the main power off state.

For example, in the case of the controller standby state or the engine standby state, the fixing section off-mode transition timer or the low-power transition timer can be set. Similarly, in the case of the fixing-standby off state or the low power state, the sleep-mode transition timer can be set. Further, in the case of the standby state or the main power off state, the weekly timer can be set.

Among the power consumption modes, the power consumption is higher in the order of the reading/printing state, the printing state, the reading state, the engine standby state, the low power state, the fixing-standby off state, the silent state, the controller standby state, the standby state, and the main power off state. The power consumption modes, the transition of each power consumption mode, and the setting items relating to the power consumption modes are merely examples, and any items are freely set as the setting items.

### Example of Display Image

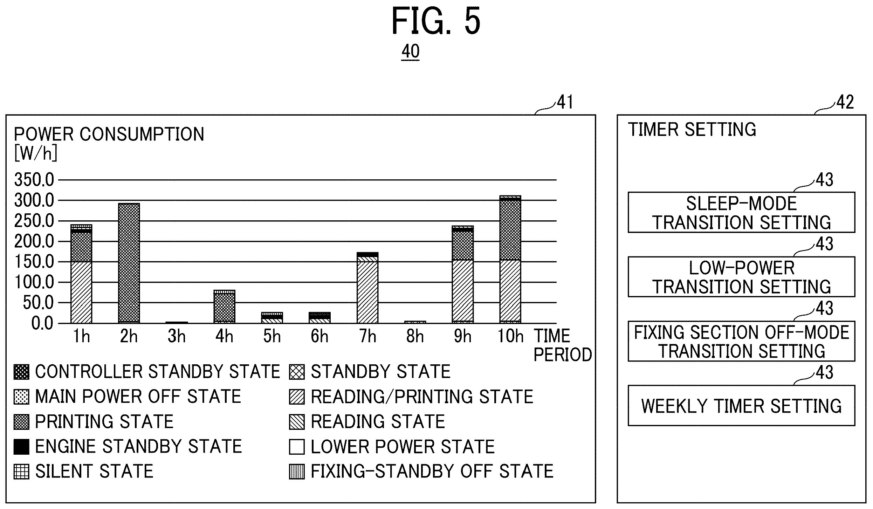

FIG. 5 is a diagram illustrating an example of a display image 40 according to the first embodiment. The display image 40 includes visualization information 41 and a selection image 42, but may include other images and information.

The display image 40 is displayed on the control panel 21 of the electronic apparatus 20, but may alternatively be displayed on the display of the terminal apparatus 30 used for managing the electronic apparatus 20, or on a display connected to the terminal apparatus 30. The display image 40 may be displayed on the control panel 21 by an application program running on the electronic apparatus 20.

The visualization information 41 is a bar graph in which the actual value of the power consumption of the electronic apparatus 20 per unit time in each power consumption mode and the power consumption mode are associated with each other. The horizontal axis of the bar graph represents unit time. The vertical axis represents power consumption. The unit time is one hour as illustrated in the drawing, but is not limited thereto, and can be set freely, for example, 10 minutes or 30 minutes. The horizontal axis may represent time. The power consumption modes include, but are not limited to, the reading/printing state, the printing state, the reading state, the engine standby state, the low power state, the fixing-standby off state, the silent state, the controller standby state, the standby state, and the main power off state.

The visualization information 41 may be any visualized information such as a graph or a table corresponding to the multiple power consumption modes of the electronic apparatus 20. For example, in the case where the electronic apparatus 20 is not an image forming apparatus, the power consumption modes may include a normal state, a low power state, a standby state, a sleep state, and a main power off state. As illustrated in the drawing, the visualization information 41 may include text information indicating which of the multiple power consumption modes the information indicated by each portion of the bars corresponds to, in the portion under the graph display region for displaying the bars. For example, in the graph display region, each portion of the bars may be displayed in a different color for each of the multiple power consumption modes. In this case, text information indicating which power consumption mode each color corresponds to and the portions of the bars may be displayed as identification information.

The selection image 42 includes setting item buttons 43 for a "sleep-mode transition setting," a "low-power transition setting," a "fixing section off-mode transition setting," and a "weekly timer setting." The setting items are not limited to these items. For example, in the case where the power consumption modes include a normal state, a low power state, a standby state, a sleep state, and a main power off state, the setting items may be, for example, a time setting for turning off the power of the display, a time setting for transitioning to the standby state, a time setting for turning off the main power.

When an operation is performed on one of the setting item buttons 43 included in the selection image 42, the output unit 13 outputs a setting image corresponding to the operated setting item button 43, and the output setting image is displayed on, for example, the control panel 21. The operation performed on the setting item button 43 is, for example, a touch operation or a click operation, but is not limited thereto. The setting image is displayed by the operation to the setting item button 43, but may be displayed by another operation.

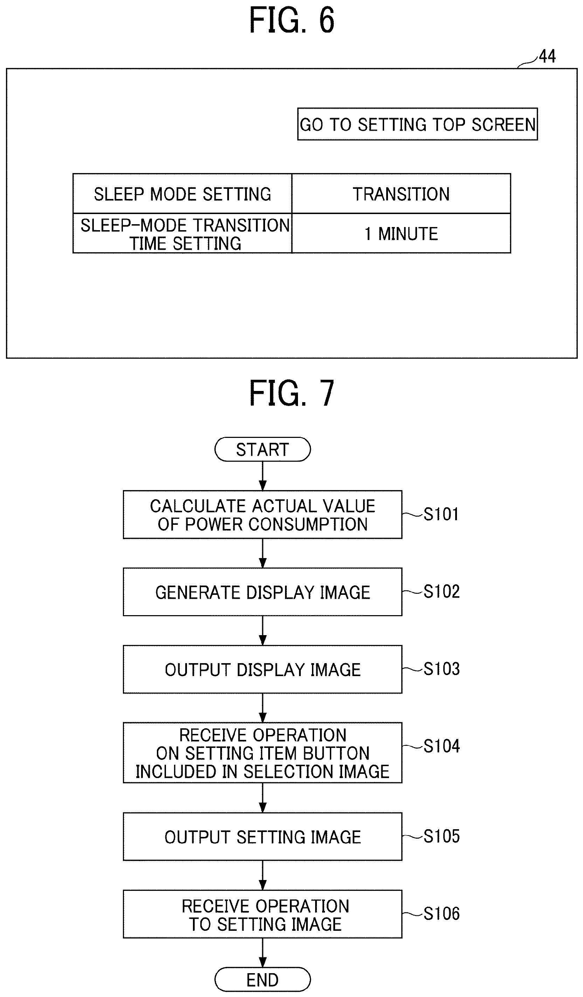

FIG. 6 is a diagram illustrating an example of a setting image 44 according to the first embodiment. The image illustrated in the drawing is an example of the setting image 44 of the sleep-mode transition setting, which is an example of the setting item relating to the power consumption mode. The contents of the items of a sleep mode setting and a sleep-mode transition time setting in the drawing are input by, for example, a button operation in a pull-down menu or an operation of an input device such as a keyboard, and may be input by another operation.

The item of the sleep mode setting is an item for setting whether to enable or disable the sleep mode (silent state), which is an example of the power consumption mode. In the sleep mode setting item, "transition" is selected to enable the sleep mode, and "not transition" is selected to disable the sleep mode.

The item of the sleep-mode transition time setting is an item for setting a period of time to transition to the sleep mode when the control panel 21 is not operated or a job is not executed. The period of time is input using an input device such as a soft keyboard, and may be input by another means. When a predetermined operation is performed in the display region of each setting item, an input screen corresponding to the setting item may be displayed.

When a "go to setting top screen" button in the drawing is pressed, a screen presenting a list of setting items relating to the transition of the mode is displayed, but the display image 40 illustrated in FIG. 5 may alternatively be displayed.

When one of the respective setting item buttons 43 of the "low-power transition setting," the "fixing section off-mode transition setting," and a "weekly timer setting" is pressed on the selection image 42 of the display image 40, the setting image 44 corresponding to the selected setting item is displayed. On each setting image 44, a user is allowed to enable or disable each power consumption mode and set the transition time.

### Information Generation Method

FIG. 7 is a flowchart of an information generation method performed by the information generation apparatus 10 according to the first embodiment.

In S101, the calculation unit 11 calculates an actual value of power consumption in each power consumption mode in the electronic apparatus 20. In S102, the generation unit 12 generates the display image 40 including the visualization information 41 associating the actual value of the power consumption of the electronic apparatus 20 and the power consumption mode with each other, and the selection image 42 for selecting a setting item relating to the power consumption mode. In S103, the output unit 13 outputs the display image 40 to the control panel 21 of the electronic apparatus 20.

In S104, the reception unit 14 receives an operation performed by the user on one of the setting item buttons 43 included in the selection image 42 of the display image 40. In S105, the output unit 13 outputs the setting image 44 corresponding to the operated setting item button 43. In S106, the reception unit 14 receives an operation to the setting image 44.

The information generation method according to the first embodiment of the present disclosure is performed by these steps. However, the information generation method according to the first embodiment of the present disclosure may include other steps as appropriate depending on, for example, measurement conditions or measurement environments.

### Modification

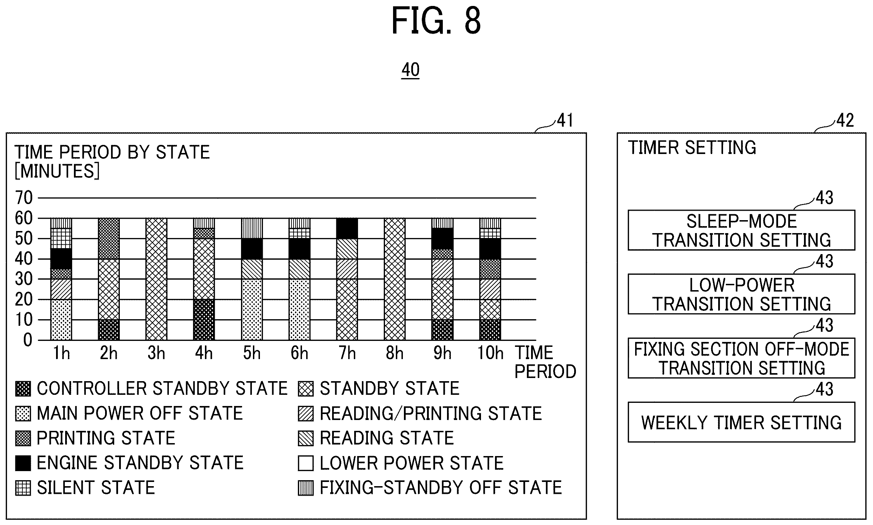

FIG. 8 is a diagram illustrating an example of the display image 40 according to a modification of the first embodiment. The visualization information 41 illustrated in FIG. 5 is a bar graph in which the actual value of the power consumption of the electronic apparatus 20 per unit time in each power consumption mode and the power consumption mode are associated with each other.

In the information generation apparatus 10 according to the modification, the calculation unit 11 calculates the execution time of the electronic apparatus 20 per unit time in each power consumption mode, and the generation unit 12 generates a graph indicating the result calculated by the calculation unit 11.

The visualization information 41 according to the modification is a bar graph presenting the actual value of the execution time of the electronic apparatus 20 per unit time in each power consumption mode. The horizontal axis of the graph represents unit time. The vertical axis represents the execution time in each power consumption mode. The unit time is one hour as illustrated in the drawing, but is not limited thereto, and can be set freely, for example, 10 minutes or 30 minutes. The power consumption modes include, but are not limited to, the reading/printing state, the printing state, the reading state, the engine standby state, the low power state, the fixing-standby off state, the silent state, the controller standby state, the standby state, and the main power off state. The selection image 42 is substantially the same as that in FIG. 5, and therefore, a description thereof is omitted.

According to the display image 40 of the modification, the execution time of the electronic apparatus 20 in each power consumption mode is visualized. Thus, the user can easily make a decision to change the setting of the electronic apparatus 20 to a state optimal for reducing power consumption of the electronic apparatus 20.

The information generation apparatus 10 according to one aspect of the present disclosure generates and displays the display image 40 including the visualization information 41 associating the power consumption mode and the actual value relating to the power consumption with each other and the selection image 42 for selecting a setting item relating to the power consumption mode in the electronic apparatus 20. The user can visually recognize the visualization information 41 associating the power consumption mode and the actual value of the power consumption with each other and the selection image 42 that is an image for setting the power consumption mode on one screen, and then can perform an operation to set the power consumption mode for the purpose of reducing the power consumption of the electronic apparatus 20.

Accordingly, according to the information generation apparatus 10 of one aspect of the present disclosure, when changing the power consumption mode of the electronic apparatus 20, the decision is made and the operation is performed in a short time.

### Second Embodiment

In the first embodiment, the setting item buttons 43, which are examples of the operation components, are included in the selection image 42. Alternatively, the operation components may be included in the visualization information 41. For example, the operation components are the portions of the bars and identification information indicating which of the multiple power consumption modes the text information indicated by each portion of the bars corresponds to.

The functional configuration of the information generation apparatus 10 according to the second embodiment is substantially the same as that of the first embodiment. However, the second embodiment differs from the first embodiment in that the operation components are identification information included in the visualization information 41 and indicating which power consumption mode the information corresponds to. In addition, the second embodiment differs from the first embodiment in that, when an operation is performed in a region corresponding to the identification information, the output unit 13 outputs the setting image 44 corresponding to the region. The operation is, for example, a touch operation by the user on the control panel 21, but may be any one of other various types of operations such a click operation.

Accordingly, in response to receiving an operation performed on an operation component that is the identification information, the setting image 44 of the setting item corresponding to the operation component is output. For example, when an operation is received in a region, which is a portion of the bars in the graph display region, corresponding to the controller standby state or a region corresponding to the text information indicating the controller standby state, the setting image 44 of the setting item corresponding to the controller standby state is output. The setting item corresponding to the controller standby state is either or both of the fixing section off-mode transition setting and the low-power transition setting.

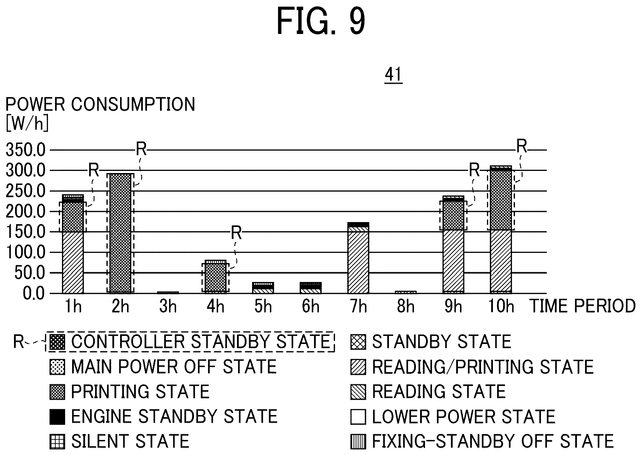

FIG. 9 is a diagram illustrating a region indicating a power consumption mode included in the visualization information 41 according to the second embodiment. The visualization information 41 illustrated in the drawing is substantially the same as the visualization information 41 illustrated in FIG. 5. The following description is based on an example of the transition of the power consumption modes illustrated in FIG. 4.

In the drawing, each region indicated by "R" is a portion of the bars corresponding to the controller standby state or a region corresponding to the text information indicating the controller standby state, and is a region corresponding to the identification information indicating the controller standby state. In the drawing, for the sake of simplicity, the regions indicating the power consumption modes other than the controller standby state are omitted.

When an operation is performed in a region indicated by "R" corresponding to the identification information indicating the controller standby state in the displayed visualization information 41, the output unit 13 outputs, for example, to the control panel 21, the setting image 44 corresponding to the fixing section off-mode transition setting or the low-power transition setting to be displayed.

In the above description, the region indicated by "R" corresponding to the identification information indicating the controller standby state is used as an example. Similarly, when an operation is performed in a region corresponding to the identification information indicating another power consumption mode, the corresponding setting image 44 is displayed.

For example, when an operation is performed in a region corresponding to the identification information indicating the engine standby state, the output unit 13 similarly outputs, for example, to the control panel 21, the setting image 44 corresponding to the fixing section off-mode transition setting or the low-power transition setting to be displayed. The setting image 44 may be a setting image that allows settings of both the fixing section off-mode transition setting and the low-power transition setting.

In another example, when an operation is performed in a region corresponding to the fixing-standby off state or the low power state, the output unit 13 outputs, for example, to the control panel 21, the setting image 44 corresponding to the sleep-mode transition setting to be displayed. In still another example, when an operation is performed in a region corresponding to the standby state or the main power off state, the output unit 13 outputs, for example, to the control panel 21, the setting image 44 corresponding to the weekly timer setting to be displayed.

### Information Generation Method

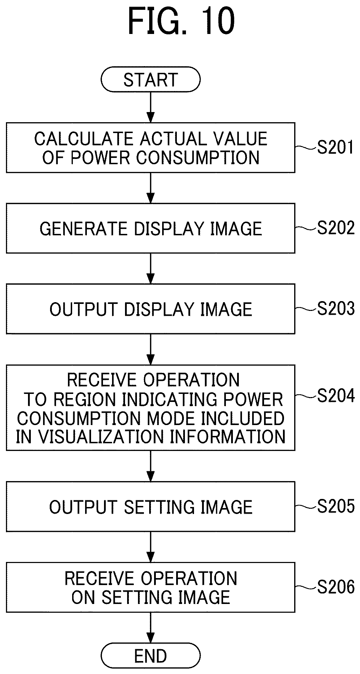

FIG. 10 is a flowchart of an information generation method performed by the information generation apparatus 10 according to the second embodiment.

In S201, the calculation unit 11 calculates an actual value of power consumption in each power consumption mode in the electronic apparatus 20. In S202, the generation unit 12 generates the display image 40 including the visualization information 41 associating the actual value of the power consumption of the electronic apparatus 20 and the power consumption mode with each other, and the selection image 42 for selecting a setting item relating to the power consumption mode. In S203, the output unit 13 outputs the display image 40 to the control panel 21 of the electronic apparatus 20.

In S204, the reception unit 14 receives an operation performed by the user in a region indicating the power consumption mode included in the visualization information 41 of the display image 40. In S205, the output unit 13 outputs the setting image 44 corresponding to the operated setting item button 43. In S206, the reception unit 14 receives an operation to the setting image 44.

The information generation method according to the second embodiment of the present disclosure is performed by these steps. However, the information generation method according to the second embodiment of the present disclosure may include other steps as appropriate depending on, for example, measurement conditions or measurement environments.

The information generation apparatus 10 according to one aspect of the present disclosure can perform, in response to an operation on the visualization information 41 of the display image 40, a setting relating to the power consumption mode of the electronic apparatus 20. Accordingly, according to the information generation apparatus 10 of one aspect of the present disclosure, in addition to the effects of the information generation apparatus 10 according to the first embodiment, since the number of regions for receiving the operation by the user increases, the operability is enhanced.

### Another Embodiment

Although an image forming apparatus has been described above as an example of the electronic apparatus 20, the electronic apparatus 20 is not limited thereto and may be another apparatus. In the case where the electronic apparatus 20 is not an image forming apparatus, the power consumption modes may include, for example, a normal state, a low power state, a standby state, and a main power off state. The normal state is a state in which the functions of the electronic apparatus 20 are executable or are being executed for a job, and may be referred to as the first state. The low power state and the standby state are states in which the power consumption is smaller than that of the normal state, and may be referred to as the second state. The main power off state is a state in which the power consumption is smaller than those of the normal state, the low power state, and the standby state, and may be referred to as the third state.

In this case, the setting image 44 illustrated as an example in FIG. 6 is an image for setting, for example, a time to turn off the power of a display, a time to transition to the standby mode, or a time to turn off the main power.

For example, when an operation is performed in a region indicating the normal state, the output unit 13 outputs, for example, to the control panel 21, the setting image 44 for setting the time to turn off the power of the display to be displayed. In another example, when an operation is performed in a region indicating the low power state, the output unit 13 outputs, for example, to the control panel 21, the setting image 44 for setting the time to transition to the standby mode to be displayed. In still another example, when an operation is performed in a region indicating the standby state or the main power off state, the output unit 13 outputs, for example, to the control panel 21, the setting image 44 for setting the time to turn off the main power to be displayed.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The functionality of the elements disclosed herein may be implemented using circuitry or processing circuitry which includes general purpose processors, special purpose processors, integrated circuits, application-specific integrated circuits (ASICs), a digital signal processor (DSP), field-programmable gate arrays (FPGAs), and/or combinations thereof which are configured or programmed, using one or more programs stored in one or more memories, to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality.

Aspects of the present disclosure are, for example, as follows.

According to Aspect 1, an information generation apparatus includes a calculation unit to calculate, for each of multiple power consumption modes of an electronic apparatus, an actual value of power consumption of the electronic apparatus, and a generation unit that generates a display image including visualization information that associates the actual value of the power consumption and the power consumption mode with each other, and an operation component for selecting a setting item relating to the power consumption mode.

According to Aspect 2, the information generation apparatus of Aspect 1 further includes an output unit that outputs the display image and a reception unit that receives a setting for the power consumption mode based on an operation performed on the operation component.

According to Aspect 3, in the information generation apparatus of Aspect 2, the output unit outputs, when the operation is performed on the operation component, a setting image for performing the setting corresponding to the setting item relating to the power consumption mode, and the reception unit receives another operation to the setting image.

According to Aspect 4, in the information generation apparatus of Aspect 3, the operation component is identification information identifying information corresponding to a particular power consumption mode included in the visualization information, and the output unit outputs, when the operation is performed in a region corresponding to the identification information, the setting image corresponding to the region.

According to Aspect 5, in the information generation apparatus of any one of Aspects 1 to 4, the calculation unit calculates the actual value of the power consumption of the electronic apparatus per unit time in each of the multiple power consumption modes, and the generation unit generates, as the visualization information, a graph indicating a result calculated by the calculation unit.

According to Aspect 6, in the information generation apparatus of any one of Aspects 1 to 5, the calculation unit calculates an execution time of the electronic apparatus per unit time in each of the multiple power consumption modes, and the generation unit generates, as the visualization information, the graph indicating the result calculated by the calculation unit.

According to Aspect 7, in the information generation apparatus of any one of Aspects 2 to 6, the electronic apparatus is an image forming apparatus, and the output unit outputs the display image to the image forming apparatus.

According to Aspect 8, in the information generation apparatus of Aspect 2, the output unit outputs the display image to an operation reception unit of the electronic apparatus.

According to Aspect 9, in the information generation apparatus of Aspect 2, the output unit outputs the display image to a terminal apparatus connected to the electronic apparatus.

According to Aspect 10, in the information generation apparatus of Aspect 3, the reception unit receives the setting item of a period of time, which corresponds to a transition timer, relating to a transition of the power consumption mode.

According to Aspect 11, an information generation method performed by an information generation apparatus includes calculating, for each of multiple power consumption modes of an electronic apparatus, an actual value of power consumption of the electronic apparatus, and generating a display image including visualization information that associates the actual value of the power consumption and the power consumption mode with each other, and an operation component for selecting a setting item relating to the power consumption mode.

According to Aspect 12, a carrier medium carries computer readable code for controlling a computer system of an information generation apparatus to carry out a method including calculating, for each of multiple power consumption modes of an electronic apparatus, an actual value of power consumption of the electronic apparatus, and generating a display image including visualization information that associates the actual value of the power consumption and the power consumption mode with each other, and an operation component for selecting a setting item relating to the power consumption mode.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information generation apparatus (10) comprising:
a calculation unit (11) configured to calculate, for each of a plurality of power consumption modes of an electronic apparatus (20), an actual value of power consumption of the electronic apparatus (20); and
a generation unit (12) configured to generate a display image, the display image including visualization information and an operation component for selecting a setting item relating to the power consumption mode, the visualization information associating the actual value of the power consumption and the power consumption mode with each other.

2. The information generation apparatus (10) according to claim 1, further comprising:
an output unit (13) configured to output the display image; and
a reception unit (14) configured to receive a setting for the power consumption mode based on an operation performed on the operation component.

3. The information generation apparatus (10) according to claim 2, wherein:
the output unit (13) outputs, in a case that the operation is performed on the operation component, a setting image for performing the setting corresponding to the setting item; and
the reception unit (14) receives another operation to the setting image.

4. The information generation apparatus (10) according to claim 3, wherein:
the operation component is identification information identifying information corresponding to a particular power consumption mode included in the visualization information; and
the output unit (13) outputs, in a case that the operation is performed in a region corresponding to the identification information, the setting image corresponding to the region.

5. The information generation apparatus (10) according to any one of claims 1 to 4, wherein:
the calculation unit (11) calculates the actual value of the power consumption of the electronic apparatus (20) per unit time in each of the plurality of power consumption modes; and
the generation unit (12) generates, as the visualization information, a graph indicating a result calculated by the calculation unit (11).

6. The information generation apparatus (10) according to any one of claims 1 to 5, wherein:
the calculation unit (11) calculates an execution time of the electronic apparatus (20) per unit time in each of the plurality of power consumption modes; and
the generation unit (12) generates, as the visualization information, the graph indicating the result calculated by the calculation unit (11).

7. The information generation apparatus (10) according to any one of claims 2 to 6, wherein:
the electronic apparatus (20) is an image forming apparatus; and
the output unit (13) outputs the display image to the image forming apparatus.

8. The information generation apparatus (10) according to claim 2,
wherein the output unit (13) outputs the display image to an operation reception unit of the electronic apparatus (20).

9. The information generation apparatus (10) according to claim 2,
wherein the output unit (13) outputs the display image to a terminal apparatus connected to the electronic apparatus (20).

10. The information generation apparatus (10) according to claim 3,
wherein the reception unit (14) receives the setting item of a period of time relating to a transition of the power consumption mode, the period of time corresponding to a transition timer.

11. An information generation method performed by an information generation apparatus (10), the method comprising:
calculating (S101, S201), for each of a plurality of power consumption modes of an electronic apparatus (20), an actual value of power consumption of the electronic apparatus (20); and
generating (S102, S202) a display image, the display image including visualization information and an operation component for selecting a setting item relating to the power consumption mode, the visualization information associating the actual value of the power consumption and the power consumption mode with each other.

12. A carrier medium carries computer readable code for controlling a computer system of an information generation apparatus (10) to carry out a method, the method comprising:
calculating (S101, S201), for each of a plurality of power consumption modes of an electronic apparatus (20), an actual value of power consumption of the electronic apparatus (20); and
generating (S102, S202) a display image, the display image including visualization information and an operation component for selecting a setting item relating to the power consumption mode, the visualization information associating the actual value of the power consumption and the power consumption mode with each other.
